## Europäisches Patentamt

## European Patent Office

## Office européen des brevets

(19)

(11) Veröffentlichungsnummer: **0 601 399 A1**

(12)

# EUROPÄISCHE PATENTANMELDUNG

(21) Anmeldenummer: **93118959.1**

(22) Anmeldetag: **25.11.93**

(51) Int. Cl.5: **C10G 35/09**, B01J 23/62

(30) Priorität: **04.12.92 DE 4240862**

(43) Veröffentlichungstag der Anmeldung:
**15.06.94 Patentblatt 94/24**

(84) Benannte Vertragsstaaten:
**BE DE FR GB IT NL**

(71) Anmelder: **Degussa Aktiengesellschaft**
**Weissfrauenstrasse 9**

**D-60311 Frankfurt(DE)**

(72) Erfinder: **Lansink-Rotgerink, Hans, Dr.**
**Hauptstrasse 15**
**D-63864 Glattbach(DE)**
Erfinder: **Brand, Reinhold, Dr.**
**Gustaf-Adolf-Strasse 25**
**D-63452 Hanau(DE)**

(54) **Katalytisches Reformieren von Naphtha mit hoher Ausbeute an BTX-Aromaten.**

(57) Die Erfindung betrifft ein Verfahren zum katalytischen Reformieren von Naphtha mit hoher Ausbeute an BTX-Aromaten. Das Verfahren ist dadurch gekennzeichnet, daß Naphtha unter üblichen Reformierbedingungen an einem Katalysator umgesetzt wird, der als katalytisch aktive Komponenten mindestens ein Platingruppen-Metall und als Promotoren mindestens ein Metall der Gruppe IV B und Zinn sowie ein oder mehrere Halogenkomponenten auf einem geformten oxidischen Träger enthält.

Fig. 1

o Katalysator A: 0,13 Gew.% Zr + 0,13 Gew.% Sn
□ Katalysator B: 0,23 Gew.% Zr + 0,03 Gew.% Sn
▲ Katalysator C: 0,25 Gew.% Zr + 0,25 Gew.% Sn
■ Katalysator D: 2,50 Gew.% Zr + 0,13 Gew.% Sn
△ Katalysator E: 0,00 Gew.% Zr + 0,25 Gew.% Sn

EP 0 601 399 A1

Rank Xerox (UK) Business Services
(3.10/3.09/3.3.4)

Gegenstand der vorliegenden Erfindung ist ein Verfahren zum katalytischen Reformieren von Naphtha mit hoher Ausbeute an BTX-Aromaten. Katalytisches Reformieren von Naphtha ist ein wichtiger Raffinations-Prozeß in der erdölverarbeitenden Industrie mit dem Ziel

1. hochoktanige Kohlenwasserstoffe für den Benzinpool oder

2. BTX-Aromaten (Benzol, Toluol, Xylol) als wichtige Chemierohstoffe oder Lösungsmittel herzustellen.

Beim katalytischen Reformieren wird Naphtha bei Temperaturen zwischen 300 und 600° C unter Wasserstoffgas bei Drucken von 1 bis 50 bar an einem Katalysator umgesetzt. Dabei laufen parallel zueinander verschiedene Reaktionen ab, wie zum Beispiel Isomerisierung, Dealkylierung, Dehydrozyklisierung, Dehydrierung, Hydrocracking und Hydrogenolyse. Welche Prozesse überwiegen hängt von den Reaktionsbedingungen, von der Zusammensetzung des jeweiligen Naphtha-Stromes und dem Katalysator ab.

Benzin stellt ein Gemisch aus vielen Kohlenwasserstoffen dar. Jedem Kohlenwasserstoff kann eine Oktanzahl zugeordnet werden. Für die Verwendung als Ottomotor-Kraftstoff wird eine hohe Oktanzahl angestrebt. Hochoktanige Kohlenwasserstoffe sind Iso-Paraffine und Aromaten.

Der Anteil von Aromaten und insbesondere von Benzol im Benzin ist in den letzten Jahren wegen ihrer Giftigkeit durch Umweltauflagen ständig erniedrigt worden. Es ist zu erwarten, daß der zulässige Aromatengehalt im Benzin in den kommenden Jahren weiter verringert wird.

Andererseits sind BTX-Aromaten wichtige Rohstoffe für die chemische Industrie. Aus Benzol werden z. B. styrolartige Kunststoffe, phenolische Polymere, Nylon und biologisch abbaubare Detergentien hergestellt. Toluol wird als Lösungsmittel in Farben angewendet und Ortho und Para-Xylol werden zu Polyesterfasern, Kunststoffolien und Kunststoff-Flaschen verarbeitet. Meta-Xylol wird normalerweise katalytisch zu para-Xylol isomerisiert. Für diese Anwendungen werden also Reformierprozesse mit möglichst hohen Ausbeuten an BTX-Aromaten gewünscht. Zur Trennung der BTX-Aromate von den nicht umgesetzten aliphatischen Kohlenwasserstoffen sind verschiedene Extraktionsverfahren bekannt (Kirk-Othmer "Encyclopedia of Chemical Technology"; 3rd Edition, Vol. 9, Seiten 707 bis 709).

Katalytisches Reformieren wird in verschiedenen Anlagentypen betrieben. Alle Verfahrensweisen beinhalten mehrere, in Reihe geschaltete Reaktoren, in denen sich der Katalysator befindet. In den sog. semiregenerativen und zyklischen Anlagen ist der Katalysator in Form eines Festbetts in den Reaktoren eingebaut. In den modernen CCR-Anlagen (CCR: "Continous Catalyst Regeneration") fließt der aus kleinen Kugeln bestehende Katalysator langsam durch die Raktoren und wird nach einer gewissen Verweilzeit (2 bis 7 Tage) ausgespeist.

Der Katalysator wird während des Betriebs langsam mit kohlenstoffhaltigen Rückständen (Coke) bedeckt. Dadurch tritt eine merkbare Deaktivierung auf.

Die Deaktivierungsgeschwindigkeit hängt von der Art des eingesetzten Naphtha, den Prozeßbedingungen und vom Katalysator ab. Ab einem bestimmten Coke-Gehalt ist es nicht mehr rentabel, den Katalysator weiter zu verwenden. Er muß zur Wiederherstellung der Aktivität regeneriert werden. In semiregenerativen und in zyklischen Anlagen wird die Regenerierung im Reaktor durchgeführt, in einer CCR-Anlage geschieht dies außerhalb. Nach Regenerierung wird der Katalysator anschließend wieder in den ersten Reaktor eingespeist. Die Regenerationshäufigkeit ist im CCR-Verfahren im Vergleich zu den beiden anderen Verfahren deutlich höher.

Der Stand der Technik auf dem Gebiet des katalytischen Reformierens hat durch jahrelange Forschungsaktivitäten inzwischen ein hohes Niveau erreicht. Wegen der großen Mengen an Naphtha, die durch Reformierprozesse an ihre spätere Verwendung angepaßt werden sollen, stellen auch schon kleinere Fortschritte einen großen wirtschaftlichen Vorteil dar.

Katalytisches Reformieren wird seit den 70er Jahren vorzugsweise mit bimetallischen Katalysatoren betrieben. Diese Katalysatoren enthalten im allgemeinen ein Platingruppenmetall (vorzugsweise Platin) und ein Zweitmetall (meistens als Promotor bezeichnet), das die katalytischen Eigenschaften des Katalysators verbessert. Als Katalysatorträger wird Aluminiumoxid eingesetzt. Weiterhin ist eine Halogenkomponente vorhanden, in der Regel Chlor.

Als Zweitmetall wird häufig Rhenium verwendet. Platin-Rhenium-Katalysatoren zeichnen sich durch eine sehr gute Stabilität aus. In den letzten Jahren werden vermehrt Pt-Sn-Katalysatoren eingesetzt.

Sie ergeben bei gleicher Oktan-Zahl eine deutlich höhere Flüssigkeitsausbeute als die Pt-Re-Katalysatoren. Die geringere Stabilität der Pt-Sn-Katalysatoren im Vergleich zu Pt-Re-Katalysatoren muß durch eine höhere Regenerationsfrequenz kompensiert werden. Pt-Sn-Katalysatoren werden deshalb vorzugsweise in CCR-Anlagen benutzt, da in diesen Anlagen die Zeit zwischen zwei aufeinanderfolgenden Regenerationen im Vergleich zu anderen Anlagentypen vergleichsweise kurz ist. Die stabileren Pt-Re-Katalysatoren werden bevorzugt in semiregenerativen und zyklischen Anlagen als Festbett-Katalysatoren eingesetzt.

Der Siedebereich des zu reformierenden Naphthas spielt eine wichtige Rolle beim Optimieren der BTX-Ausbeute. Die Precursor des Benzols haben einen Siedepunkt zwischen 71 und 82° C, die Toluol-Precursor zwischen 82 und 121° C (D.M. Little in "Catalytic Reforming", Penn Well Publishing Company, 1985, Chapter 6). Die Xylol-Precursor ($C_8$) sieden zwischen 106 und 130° C.

Bei der BTX-Herstellung werden dagegen Fraktionen des Naphthas mit einem Siedebereich zwischen 65 und 175° C oder zwischen 71 und 171° C verwendet. Auch engere Siedebereiche kommen zum Einsatz, wie z. B. 84 bis 157° C. In jedem Fall beinhaltet Naphtha mit diesen Siedebereichen auch immer $C_{9+}$-Kohlenwasserstoffe, da sich die Siedebereiche der $C_8$- und $C_{9+}$-Kohlenwasserstoffe weitgehend überlappen (Kirk-Othmer "Encyclopedia for Chemical Technology"; 3rd Edition, Vol. 4, Seiten 264 - 277). Das Reformat dieser Naphtha-Fraktionen enthält daher im allgemeinen neben den BTX-Aromaten erhebliche Anteile an $C_{9+}$-Aromaten.

Erhöhte Ausbeuten an BTX-Aromaten können durch verfahrenstechnische Maßnahmen erzielt werden. Im Europa Patent EP 0 234 837 wird ein Reformier-Verfahren für eine schwer siedende Naphtha-Fraktion (Siedebereich 118 bis 198° C) beschrieben, mit dem unter Einsatz von zwei unterschiedlichen Katalysatoren in zwei Zonen erhöhte BTX-Ausbeuten erzielt werden können. In der ersten Zone wird ein Pt-Sn-Katalysator und in der zweiten Zone ein Platin-Katalysator, der noch zusätzlich Re enthalten kann, eingesetzt. Da in diesem Patent 2 Katalysatoren verwendet werden müssen, kann dieses Verfahren nicht in den dem neuesten Stand der Technik entsprechenden CCR-Anlagen angewendet werden, die im allgemeinen nur eine Regenerieranlage beinhalten.

Das US Patent 3 943 050 beschreibt ebenfalls ein 2-Stufen-Verfahren zum Reformieren von Naphtha-Fraktionen des Benzin-Siedebereichs von etwa 50 bis 215° C für die Produktion von hochoktanigen Verschnitt-Komponenten für Motortreibstoffe. In der ersten Stufe wird ein Katalysator ohne Zirkon eingesetzt. In der zweiten Stufe wird ein zirkonhaltiger Katalysator verwendet. Das gebildete Reformat wird nur in Hinsicht auf seine Anwendung im Benzin mittels Oktanzahl charakterisiert. Das Patent gibt keine Hinweise über die Höhe der BTX-Anteile im Reformat.

Das deutsche Patent DE 29 20 741 beschreibt ein Verfahren zur Ablagerung von Zirkon auf einem oxidischen Träger. Zirkon wird dabei aus einer zirkonhaltigen Lösung abgeschieden, die wenigstens ein Zirkon-Komplex-Ion enthält, das aus einer organischen Säure, vorzugsweise Oxalsäure, gebildet wird. In den Beispielen werden dementsprechend hergestellte Katalysatoren (die neben Zr auch noch Cl, Pt und Sn enthalten) beim Isomerisieren von $C_8$-Aromaten, von Paraffinen und beim Reformieren von n-Heptan eingesetzt. Eine erhöhte Ausbeute an BTX-Aromaten konnte nicht festgestellt werden.

In der deutschen Patentschrift DE 24 55 375 wird ein Katalysator beansprucht, der neben einem Platingruppenmetall und Zinn zumindest eines der Metalle Zirkon, Titan oder Wolfram enthält und beim Reformieren von Kohlenwasserstoffen eingesetzt wird. Bei der Aromatisierung von $C_6$- bis $C_7$-Kohlenwasserstoffgemischen mit einem Pt-Sn-Zr-Katalysator liegt die Selektivität bezüglich der Aromaten je nach dem Gehalt des Eduktes an Naphthenen zwischen 45,8 und 53,8 %.

Das US Patent 4 197 188 beschreibt Katalysatoren, die neben einem Platingruppenmetall und Zirkon zusätzlich Rhenium enthalten. Im französichen Patent 2 187 885 ist ein Reformier-Katalysator beschrieben, der neben Aluminiumoxid, Platin und Zirkon mindestens eines der Lanthanid-Metalle enthält. Das erhaltene Reformat wird nur im Hinblick auf Anwendung für Benzin mittels Oktanzahl charakterisiert. Es werden keine einzelnen Substanzen (wie z. B. Benzol, Toluol oder Xylol) betrachtet.

Neben den oben genannten Anwendungen beim Reformieren werden Zr-haltige Katalysatoren bei der Isomerisierung eingesetzt (z. B. DE 26 39 747, DE 26 15 066, DE 27 31 669).

Aufgabe der vorliegenden Erfindung ist es, ein Verfahren zum katalytischen Reformieren von Naphtha mit nur einem Katalysator anzugeben, das sich durch eine erhöhte Ausbeute an BTX-Aromaten auszeichnet und daher vorteilhaft bei der Gewinnung von Ausgangsstoffen für die chemische Industrie eingesetzt werden kann.

Erfindungsgemäß wird diese Aufgabe durch ein Verfahren zum katalytischen Reformieren von Naphtha mit hoher Ausbeute an BTX-Aromaten gelöst, das dadurch gekennzeichnet ist, daß Naphtha unter üblichen Reformierbedingungen an einem Katalysator umgesetzt wird, der als katalytisch aktive Komponenten mindestens ein Platingruppen-Metall und als Promotoren mindestens ein Metall der Gruppe IVB und Zinn sowie ein oder mehrere Halogenkomponenten auf einem geformten oxidischen Träger enthält.

Übliche Reformierverfahren arbeiten bei Reaktortemperaturen von 300 bis 600, bevorzugt 460 bis 540° C und Wasserstoff-Drücken von 1 bis 50, bzw. 3 bis 25 bar. Der Naphtha-Strom wird dabei mit einer auf Gewichtsverhältnisse umgerechneten Raumgeschwindigkeit WHSV (Weight Hourly Space Velocity; Gramm Naphtha pro Stunde und Gramm Katalysator) von 0,5 bis 10, typischerweise 1,0 bis 3,0 $h^{-1}$, im Reaktor umgesetzt. Das Molverhältnis Wasserstoff zu Naphtha wird dazu auf Werte zwischen 1 bis 15, insbesondere 2 bis 10 eingestellt.

Der oxidische Träger gemäß der vorliegenden Erfindung enthält ein hochoberflächiges, poröses Material wie zum Beispiel die verschiedenen aktiven Aluminiumoxide aus der Übergangsreihe der kristallographischen Phasen oder Aluminiumsilikate. Bevorzugt werden Träger eingesetzt, die als wesentlichen Bestandteil gamma- oder eta-Aluminiumoxid enthalten und eine spezifische Oberfläche nach BET (DIN 66132) zwischen 100 und 600 m²/g sowie ein Porenvolumen von 0,3 bis 1,0 ml/g aufweisen, welches sich hauptsächlich aus Meso- und Makroporen mit Porenradien zwischen 1 und 25 nm bzw. oberhalb von 25 nm zusammensetzt (gemäß einer Einteilung nach IUPAC; Pure & Appl. Chem., 57 (1985), 603 - 619).

Die Träger können nach der Öl-Tröpfchen-Methode aus einem Sol, durch Aufbauagglomeration oder durch Extrusion aus pulverförmigen Ausgangsstoffen hergestellt werden. Bevorzugt weisen die Träger Kugelform mit Durchmessern im Bereich von 0,5 bis 3,0 mm auf. Die aktiven Komponenten des Katalysators werden durch Imprägnieren mit wäßrigen Lösungen geeigneter Vorläuferverbindungen in den Träger eingebracht. Hierzu eignen sich Sprüh- oder Tauchimprägnierungen gleichermaßen.

Durch Zugabe einer anorganischen Säure, z. B. Salzsäure zur Imprägnierlösung, wird eine homogene Imprägnierung der aktiven Komponenten über den gesamten Querschnitt der Träger erreicht.

Besonders hohe Ausbeuten an BTX-Aromaten werden erzielt, wenn als Platingruppen-Metall Platin, als Promotoren Zinn und Zirkon und als Halogen Chlor eingesetzt wird. Bevorzugte Platinverbindungen für die Herstellung des Katalysators sind solche, mit denen gleichzeitig die Chlorkomponente eingebracht werden kann, wie zum Beispiel Hexachloroplatinsäure, Ammoniumhexachloroplatinat, Diammindichloroplatin(II) und Diammintetrachloro-platin(IV) sowie Platin(II)-chlorid und Platin(IV)-chlorid. Auch chlorfreie Platinverbindungen können verwendet werden. Geeignete Zirkonverbindungen sind Zirkonylnitrat, Zirkonylacetat, Zirkonylchlorid und Zirkonchlorid oder andere wasserlösliche Zirkon-Verbindungen. Geeignete Zinn-Verbindungen sind Zinn(II)chlorid, Zinn(IV)chlorid, Zinn(II)chlorid-dihydrat oder andere wasserlösliche Zinn-Verbindungen.

Das Platingruppen-Metall und die Promotoren können entweder aus einer gemeinsamen Lösung oder aus getrennten Lösungen aufgebracht werden, wobei die Reihenfolge der Imprägnierungen keine Rolle spielt. Nach der Imprägnierung werden die erhaltenen Katalysatorvorstufen getrocknet und gegebenenfalls kalziniert und anschließend bei Temperaturen von 300 bis 600° C unter einem wasserstoffhaltigen Gasstrom reduziert und aktiviert.

Der fertige Katalysator enthält bevorzugt 0,5 bis 2 Gew.-% Platin, 0,01 bis 1 Gew.-% Zinn, 0,05 bis 5 Gew.-% Zirkon und 0,5 bis 1,5 Gew.-% Chlor jeweils bezogen auf das Gewicht des Trägermaterials.

Wesentlich für die Erfindung ist, daß ein $C_{9+}$-haltiges Naphtha, wie das in der Industrie üblicherweise auch der Fall ist, verwendet wird. Bei erfindungsgemäßer Verwendung des Katalysators kann beobachtet werden, daß im Reformat der gewünschte Anteil an BTX-Aromaten zu- und der Anteil an $C_{9+}$ Kohlenwasserstoffen abnimmt. Dadurch wird der Aufwand zur Abtrennung der BTX-Aromate von dem Reformat verringert.

Die Erfindung wird nun anhand einiger Beispiele näher erläutert. Es zeigen

Figur 1: BTX-Gehalt im Reformat bei erfindungsgemäßer Verwendung von Pt-Sn-Zr-Katalysatoren im Vergleich zur Verwendung eines Pt-Sn-Katalysators in Abhängigkeit von der Betriebsdauer des Reformierprozesses

Figur 2: Benzol-Gehalt im Reformat von Figur 1

Figur 3: Toluol-Gehalt im Reformat von Figur 1

Figur 4: Xylol-Gehalt im Reformat von Figur 1

Das erfindungsgemäße Verfahren wurde in einem Festbettreaktor getestet. Hierzu wurden jeweils 15,0 g Katalysator in den Reaktor eingebracht. Das restliche Reaktorvolumen wurde mit Inertkörper aufgefüllt. Der Reaktor befand sich in einem Salzbad, das kontinuierlich gerührt wurde. Dadurch wurde ein isothermer Betrieb der Katalysatorschüttung sichergestellt.

Nach Einbau des Katalysators wurde er unter einem $N_2$-Gasstrom bis auf 500° C aufgeheizt. Dann wurde $N_2$ durch $H_2$ ersetzt und der Druck auf 10 bar erhöht. Der $H_2$-Durchsatz betrug bei den Versuchen jeweils 17,5 Nl/h.

Nach einer Wartezeit von 1 Stunde wurde Naphtha zudosiert. Sowohl der $H_2$-Strom als auch das Naphtha wurden durch Überleiten über ein Molekularsieb von 0,5 nm Porenweite getrocknet. Das Naphtha wurde zusätzlich mit Argongas überschichtet, um den Chloraustrag während des Reformierens zu minimieren und sicherzustellen, daß der Chlorgehalt des Katalysators während des Reformierprozesses im Idealbereich zwischen 0,7 und 1,0 Gew.-% lag.

Die den Reaktor verlassenden Gase wurden zur Abtrennung der $C_{5+}$-Kohlenwasserstoffe gekühlt. Der Gehalt des Flüssigproduktes an BTX-Aromaten wurde bestimmt.

Als Kenngrößen für das Reformierverfahren wurden die Flüssigkeitsausbeute $A_{flüssig}$ und die BTX-Ausbeute $A_{BTX}$ aus den gemessenen Massen des Flüssigproduktes $M_{flüssig}$ und der BTX-Aromate $M_{BTX}$ unter Verwendung der eingesetzten Masse des Naphtha $M_{Naphtha}$ nach folgenden Beziehungen berechnet:

$$A_{flüssig} = (M_{flüssig} / M_{Naphtha}) \cdot 100\,\%$$
$$A_{BTX} = (M_{BTX} / M_{Naphtha}) \cdot 100\,\%$$

Das eingesetzte Naphtha war ein "full-boiling-range" Naphtha mit einem Siedebereich zwischen 50 und 190° C. Der Schwefelgehalt war kleiner als 1 ppm.

Die Verfahrensbedingungen, unter denen das Naphtha reformiert wurde, sind in Tabelle 1 zusammengefaßt:

Tabelle 1

| Verfahrensbedingungen | |
|---|---|
| Katalysatorgewicht: | 15.0 g |
| Temperatur: | 500° C |
| Druck: | 10 bar |
| $H_2$-Durchsatz: | 17.5 l/h (20° C, 1 bar) |
| Naphtha-Durchsatz: | 22.5 g/h |
| WHSV[*]: | 1.5 $h^{-1}$ |
| $H_2$/Naphtha-Verhältnis: | 4/1 mol/mol |

[*]: Weight hourly space velocity [ g Naphtha / ( h · g Katalysator ) ]

Katalysatorpräparation

Der Katalysatorträger in Kugelform mit Durchmessern im Bereich zwischen 1.7 und 2.3 mm bestand aus gamma-Aluminiumoxid. Das Material hatte eine BET-Oberfläche von 185 $m^2$/g und ein Porenvolumen von 0.60 ml/g. 300 g des Trägers wurden in einem rotierenden Behälter vorgelegt und mit 180 ml einer Zr- und Sn-haltigen HCl-Lösung besprüht.

Diese Lösung wurde durch Zugabe von 1,33 g $ZrOCl_2$ · $8H_2O$ und 0,75 g $SnCl_2$ · $2H_2O$ zu 180 ml einer wäßrigen 2,5 molaren HCl-Lösung hergestellt. Der Sprühvorgang dauerte 30 min. Nach einer einstündigen Wartezeit wurden die feuchten Pellets im Wirbelbett während 30 min bei 120° C getrocknet. Danach erfolgte eine 1-stündige Kalzination in Luft bei 500° C.

Auf die so erhaltene Katalysator-Vorform wurde eine Lösung aus 3,0 g $H_2PtCl_6$ (40 Gew.-% Pt) in 180 ml 1,0 molarer HCl gesprüht. Nach anschließender Trocknung und Kalzination (Bedingungen wie oben) wurde der Katalysator während 4 Stunden bei 500° C mit einem Gasgemisch aus 5 Vol.% $H_2$ und 95 Vol.% $N_2$ reduziert. Dieser Katalysator wird im folgenden als Katalysator A bezeichnet. Der fertige Katalysator A enthielt 0,40 Gew.-% Pt und 0,13 Gew.-% Zr und 0,13 Gew.-% Sn.

Katalysatoren B, C und D wurden genau wie Katalysator A hergestellt. Lediglich die Menge des eingesetzten Zirkonylchlorids ($ZrOCl_2$) wurde verändert. Katalysator B enthielt neben Platin und Chlor 0,23 Gew.-% Zr und 0,03 Gew.-% Sn, Katalysator C 0,25 Gew.-% Zr und 0,25 Gew.-% Sn und Katalysator D 2,5 Gew.-% Zr und 0,13 Gew.-% Sn. Katalysator E wurde zu Vergleichszwecken hergestellt. Katalysator E enthielt 0,40 Gew.-% Pt und 0,25 Gew.-% Sn.

Der Chlorgehalt der Katalysatoren A bis E lag zwischen 0,9 und 1,1 Gew.-%.

Beispiel 1

In diesem Beispiel wurden Reformierverfahren unter Verwendung der Katalysatoren A bis E miteinander verglichen. Alle fünf Katalysatoren wurden wie oben beschrieben auf genau die gleiche Art und Weise mit Naphtha aus dem gleichen Faß getestet.

Die Zusammensetzung des Naphtha ist in Tabelle 2 aufgelistet.

Tabelle 2

| Naphtha Zusammensetzung | | | |
|---|---|---|---|
| Gew.-% | | Gew.-% | |
| $C_5$ | 0.7 | $C_8$ | 32.5 |
| $C_6$ | 11.4 | $C_9$ | 18.4 |
| $C_7$ | 25.5 | $C_{10+}$ | 11.5 |

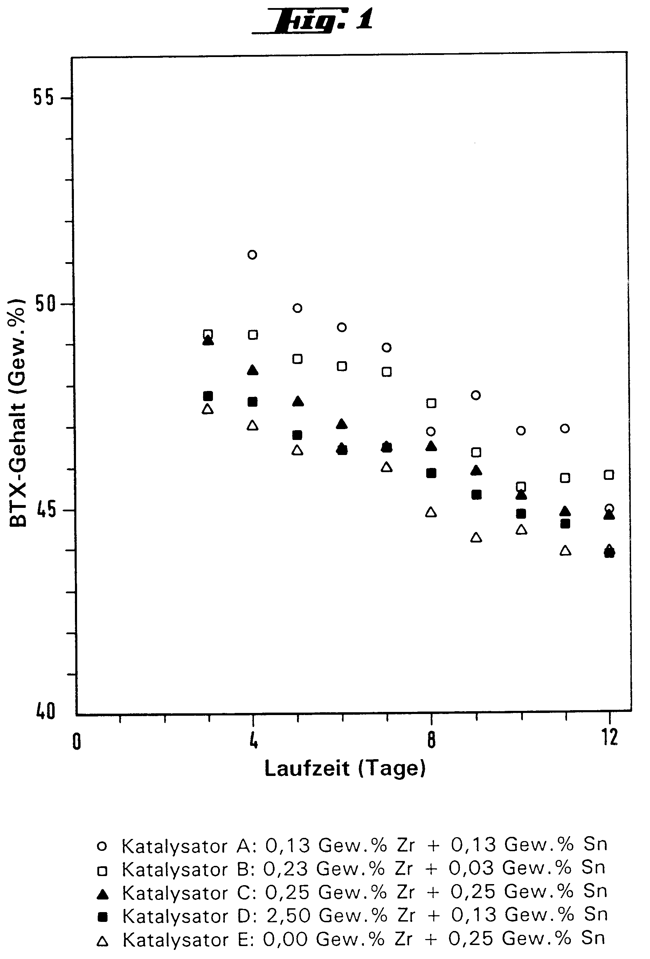

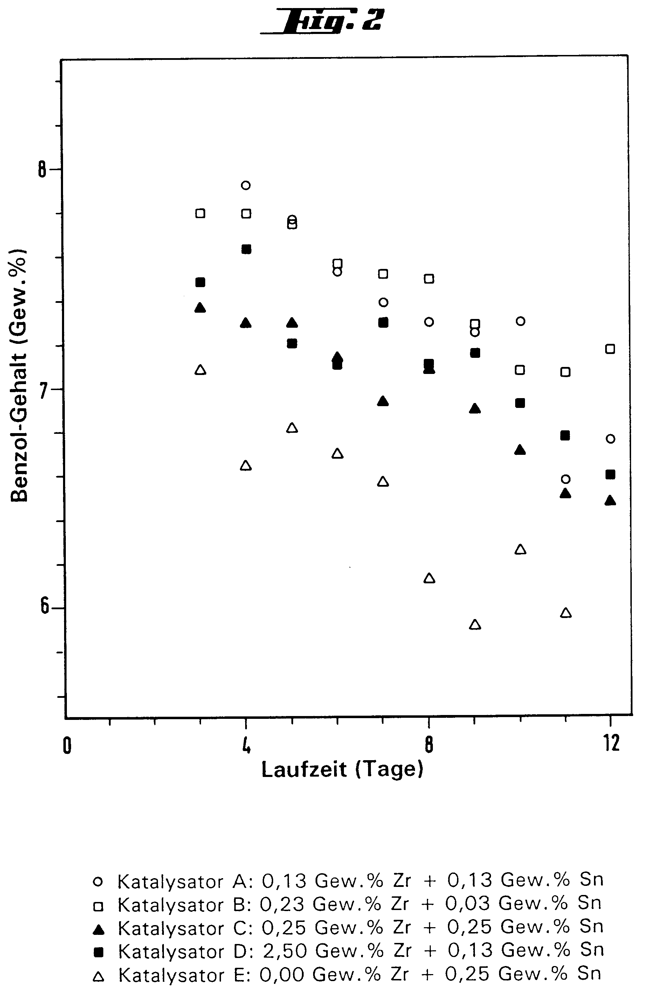

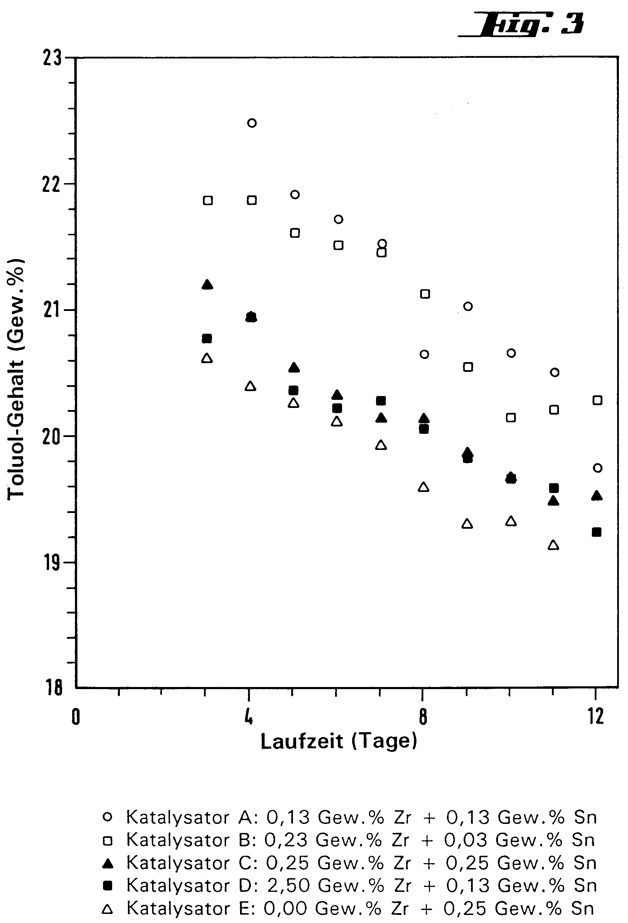

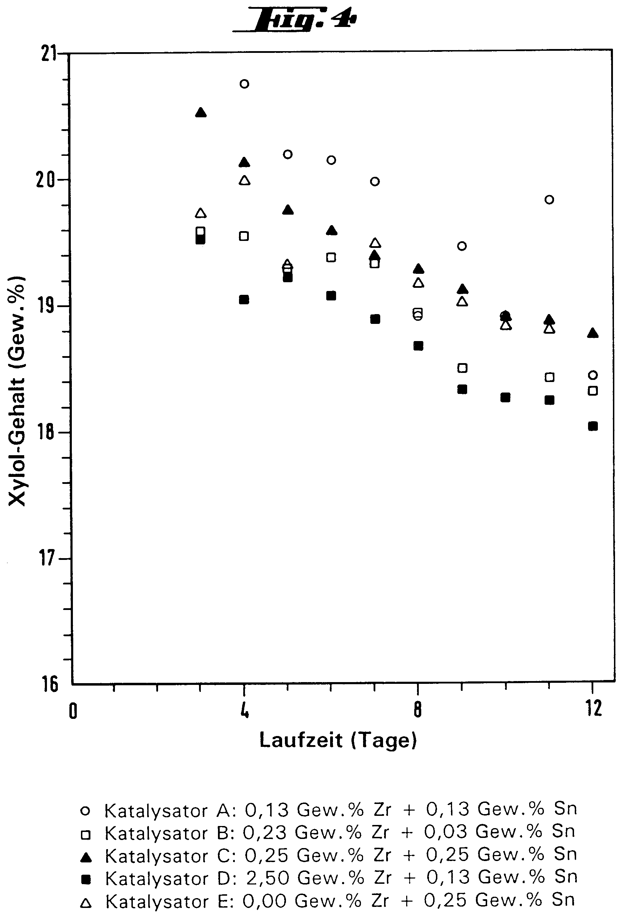

In Figur 1 ist der BTX-Gehalt des Flüssigprodukts als Funktion der Laufzeit dargestellt. Wie daraus hervorgeht, ist der BTX-Gehalt, der mit den erfindungsgemäß zu verwendenden Katalysatoren A bis D erzielt wurde, höher als der mit Katalysator E. Wie aus den Figuren 2 bis 4 hervorgeht, ist dies hauptsächlich auf eine Steigerung der Benzol- und Toluol-Gehalte zurückzuführen. Der Xylol-Gehalt ist für den Katalysator A höher, für den Katalysator C identisch und für die Katalysatoren B und D niedriger als für Katalysator E.

Die Flüssigkeitsausbeute ist für die Katalysatoren A und B etwas geringer als für den Vergleichskatalysator E. Die Katalysatoren C und D haben eine höhere Flüssigkeitsausbeute. Die BTX-Ausbeute insgesamt ist für die Katalysatoren A bis D aber deutlich höher als für den Vergleichskatalysator E (siehe Tabelle 3):

Tabelle 3

| BTX-Ausbeuten mit den Katalysatoren A, B, C, D und E (Pt-Gehalt jeweils 0,4 Gew.-%) | | | | | |
|---|---|---|---|---|---|
| Kat. | Gew.% | Zr Gew.% | Sn mittlerer BTX-Gehalt (Gew.%) | mittlere Flüssigkeitsausbeute (Gew.%) | mittlere BTX-Ausbeute (Gew.%) |
| A | 0.13 | 0.13 | 48.4 | 81.4 | 39.4 |
| B | 0.23 | 0.03 | 47.6 | 81.8 | 38.9 |
| C | 0.25 | 0.25 | 46.8 | 83.6 | 39.1 |
| D | 2.50 | 0.13 | 46.2 | 83.3 | 38.5 |
| E | - | 0.25 | 45.6 | 82.8 | 37.8 |

Die höheren BTX-Ausbeuten stellen bei großtechnischem Einsatz des erfindungsgemäßen Verfahrens einen erheblichen wirtschaftlichen Vorteil dar. Die deutlich höheren BTX-Gehalte im Flüssigprodukt verringern darüber hinaus den Aufwand für die Extraktion der BTX-Aromate.

**Patentansprüche**

1. Verfahren zum katalytischen Reformieren von Naphtha mit hoher Ausbeute an BTX-Aromaten,
   **dadurch gekennzeichnet**,
   daß Naphtha unter üblichen Reformierbedingungen an einem Katalysator umgesetzt wird, der als katalytisch aktive Komponenten mindestens ein Platingruppen-Metall und als Promotoren mindestens ein Metall der Gruppe IVB und Zinn sowie ein oder mehrere Halogenkomponenten auf einem geformten oxidischen Träger enthält.

2. Verfahren nach Anspruch 1,
   **dadurch gekennzeichnet**,
   daß das Platingruppen-Metall Platin ist.

3. Verfahren nach den Ansprüchen 1 bis 2,
   **dadurch gekennzeichnet**,
   daß das Promotor-Metall aus der Gruppe IVB Zirkon ist.

4. Verfahren nach den Ansprüchen 1 bis 3,
   **dadurch gekennzeichnet**,
   daß die Halogenkomponente Chlor ist.

**5.** Verfahren nach den Ansprüchen 1 bis 4,
**dadurch gekennzeichnet**,
daß das Trägermaterial ein Aluminiumoxid aus der Übergangsreihe der kristallographischen Phasen ist, auf dem 0,05 bis 2 Gew.-% Platin, 0,01 bis 1 Gew.-% Zinn, 0,05 bis 5 Gew.-% Zirkon und 0,5 bis 1,5 Gew.-% Chlor, jeweils bezogen auf das Gewicht des Trägermaterials, vorliegen.

## Fig. 1

○ Katalysator A: 0,13 Gew.% Zr + 0,13 Gew.% Sn
□ Katalysator B: 0,23 Gew.% Zr + 0,03 Gew.% Sn
▲ Katalysator C: 0,25 Gew.% Zr + 0,25 Gew.% Sn
■ Katalysator D: 2,50 Gew.% Zr + 0,13 Gew.% Sn
△ Katalysator E: 0,00 Gew.% Zr + 0,25 Gew.% Sn

## Fig. 2

o  Katalysator A: 0,13 Gew.% Zr + 0,13 Gew.% Sn
□  Katalysator B: 0,23 Gew.% Zr + 0,03 Gew.% Sn
▲  Katalysator C: 0,25 Gew.% Zr + 0,25 Gew.% Sn
■  Katalysator D: 2,50 Gew.% Zr + 0,13 Gew.% Sn
△  Katalysator E: 0,00 Gew.% Zr + 0,25 Gew.% Sn

Fig. 3

○ Katalysator A: 0,13 Gew.% Zr + 0,13 Gew.% Sn
□ Katalysator B: 0,23 Gew.% Zr + 0,03 Gew.% Sn
▲ Katalysator C: 0,25 Gew.% Zr + 0,25 Gew.% Sn
■ Katalysator D: 2,50 Gew.% Zr + 0,13 Gew.% Sn
△ Katalysator E: 0,00 Gew.% Zr + 0,25 Gew.% Sn

*Fig. 4*

Laufzeit (Tage)

Xylol-Gehalt (Gew.%)

○ Katalysator A: 0,13 Gew.% Zr + 0,13 Gew.% Sn
□ Katalysator B: 0,23 Gew.% Zr + 0,03 Gew.% Sn
▲ Katalysator C: 0,25 Gew.% Zr + 0,25 Gew.% Sn
■ Katalysator D: 2,50 Gew.% Zr + 0,13 Gew.% Sn
△ Katalysator E: 0,00 Gew.% Zr + 0,25 Gew.% Sn

Europäisches Patentamt

**EUROPÄISCHER RECHERCHENBERICHT**

Nummer der Anmeldung

EP 93 11 8959

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,X | FR-A-2 252 394 (COMPAGNIE FRANCAISE DE RAFFIOAGE) <br> * Ansprüche 1-13 * <br> ----- | 1-5 | C10G35/09 <br> B01J23/62 |
| | | | **RECHERCHIERTE SACHGEBIETE (Int.Cl.5)** <br><br> C10G <br> B01J |

Der vorliegende Recherchenbericht wurde für alle Patentansprüche erstellt

| Recherchenort | Abschlußdatum der Recherche | Prüfer |
|---|---|---|
| DEN HAAG | 23. Dezember 1993 | Michiels, P |